# EUROPEAN PATENT APPLICATION

(11) **EP 2 882 195 A1**
(43) Date of publication of application: **10.06.2015**
(21) Application number: 14179006.3
(22) Date of filing: 29.07.2014
(51) Int. Cl.: H04N 21/422, G06F 3/0354, H04N 21/431

(54) **Display apparatus, remote controller, display system, and display method**

(30) Priority: 06.12.2013 KR 20130151304
(71) Applicant: Samsung Electronics Co., Ltd, Gyeonggi-do 443-742 (KR)
(72) Inventor: Kim, Han-soo, Gyeonggi-do (KR); Yoon, Yeo-ri, Chungcheongbuk-do (KR); Lee, Dong-heon, Seoul (KR)
(74) Representative: Taor, Simon Edward William

(57) **Abstract**

A display apparatus is provided. The display apparatus includes a receiver configured to receive a touch signal corresponding to a projection formed within a touch pad of a remote controller, a display configured to, when the touch signal is received, display a control graphic user interface (GUI) having at least one function menu corresponding to the projection, and a controller configured to, when a user manipulation is received from the projection, select and automatically execute a function menu in response to the user manipulation.

## Description

Exemplary embodiments relate to a display apparatus, a remote controller, a display system, and a display method, and more particularly, to a display apparatus, a remote controller, a display system, and a display method for executing a function by a touch signal with respect to a projection formed within a touch pad of a remote controller.

As technology progresses, televisions (TV) employing various functions are being developed. That is, when compared with a related art analog TV, newer TVs provide improved performance and various functions, and are being developed in connection with wired/wireless communication. Accordingly, a user is able to watch content through a TV, and experience more types of content, applications, or a high definition screen through a combination of the TV and other peripherals or the Internet. Newly developed digital TVs (DTV), Internet Protocol TVs (IPTV), and smart TVs provide the aforementioned functions.

A remote controller is used to control such a TV. In general, a TV remote controller is an apparatus which transmits a control signal in a wired or wireless manner so that a user is able to control the functions of the TV remotely without using a control button disposed on the TV. Recently, such a remote controller is used to control most of home appliances for convenience, and a wireless remote controller is commonly used rather than a wired one due to its portability.

A recently developed TV provides various functions, and thus, a remote controller is able to control the various functions. In order to control various functions of a TV, the remote controller must be equipped with various buttons corresponding to the functions of the TV. That is, unlike the related art TV which merely performs a few simple and basic functions, newer TV's are being developed to perform complicated and various functions, and thus, a remote controller for controlling the newer TV's is equipped with complicated configurations as well.

In order for a user to control a TV in a state in which the user watches the TV, the user turns his/her eyes to a remote controller. That is, in order to control the TV while the user watches the TV, the user should turn his/her eyes from the TV to a remote controller, which distracts the user from concentrating on the contents displayed through the TV. Exemplary embodiments are provided to address the aforementioned and other problems and disadvantages occurring in the related art, and an aspect of an exemplary embodiment provides a display apparatus, a remote controller, a display system, and a display method for executing a control function in response to a user manipulation of touching a projection formed within a remote controller.

A display apparatus according to an exemplary embodiment includes a receiver configured to receive a touch signal corresponding to a projection formed within a touch pad of a remote controller, a display configured to, when the touch signal is received, display a control graphic user interface (GUI) having at least one function menu corresponding to the projection, and a controller configured to, when a user manipulation is received from the projection, select and automatically execute a function menu according to the user manipulation.

When the touch signal is received while content is displayed on the display, the controller may generate the control GUI having different function menus according to a type of the content, and display the generated control GUI on a side of the content.

The control GUI may be displayed in a linear form on a side of a displayed content. In addition, the controller may move a cursor onto the control GUI to correspond to a touched position of the projection.

When a touch signal corresponding to a center of the projection is received, the controller may display a cursor on a center of the control GUI, and display different functions menus on both sides of the control GUI.

When a drag signal in a direction where the projection is formed is received, the controller may move the cursor in a direction corresponding to the direction, and select a function menu corresponding to the direction where the cursor is moved.

When a drag and hold signal in the direction where the projection is formed is received, the controller may select a function menu corresponding to a drag direction, and execute the selected function menu consecutively while a hold state is maintained.

The control GUI may include a plurality of control GUIs which respectively correspond to a plurality of projections formed on the touch pad.

The controller may form an on screen display (OSD) on a side of the content, and display the control GUI on a side of the formed OSD when the touch signal is received.

A remote controller having a touch pad of sensing a touch according to an exemplary embodiment includes a touch signal generating unit configured to, when a touch on a projection formed within the touch pad is sensed, generate a touch signal and an output unit configured to output the generated touch signal. In addition, the touch signal controls a display to display a control graphic user interface (GUI) having at least one function menu corresponding to the projection on a display apparatus.

The projection may be formed in a linear form on a side of the touch pad.

A display system according to an exemplary embodiment includes a remote controller configured to have a touch pad and a projection formed within the touch pad and a display apparatus configured to be controllable by a touch signal transmitted from the remote controller. In addition, when a touch on the projection is received, the display apparatus displays a control graphic user interface (GUI) having at least one function menu corresponding to the projection, and when a user manipulation is received from the projection, selects and automatically executes a function menu in response to the user manipulation.

A display method according to an exemplary embodiment includes receiving a touch signal corresponding to a projection formed within a touch pad of a remote controller, displaying a control graphic user interface (GUI) having at least one function menu corresponding to the projection, and when a user manipulation is received from the projection, selecting and automatically executing a function menu in response to the user manipulation.

When the touch signal is received while a content is displayed, the displaying a control GUI may include displaying the control GUI having different function menus according to a type of the content.

The method may further include moving a cursor onto the control GUI to correspond to a touched position of the projection.

When a touch signal corresponding to a center of the projection is received, the displaying a control GUI may include displaying a cursor on a center of the control GUI, and displaying different function menus on both sides of the control GUI.

When a drag signal in a direction where the projection is formed is received, the selecting and automatically executing at least one function menu may include moving the cursor in a direction corresponding to the direction where the projection is formed, and selecting and automatically executing a function menu corresponding to a direction where the cursor is moved.

When a drag and hold signal in the direction where the projection is formed is received, the selecting and automatically executing at least one function menu may include selecting and consecutively executing a function menu corresponding to a drag direction while a hold state is maintained.

The displaying a control GUI may include forming an on screen display (OSD) on a side of the content, and when the touch signal is received, displaying the control GUI on a side of the formed OSD.

According to an aspect of the invention, there is provided a display apparatus as set out in claim 1. Preferred features of this aspect are set out in claims 2 to 8.

According to an aspect of the invention, there is provided a remote controller as set out in claim 9. Preferred features of this aspect are set out in claim 10.

According to an aspect of the invention, there is provided a display system as set out in claim 11.

According to an aspect of the invention, there is provided a display method as set out in claim 12. Preferred features of this aspect are set out in claims 13 to 15.

According to the aforementioned various exemplary embodiments, a user is able to execute a desired control function without seeing a remote controller.

The above and/or other aspects of the present inventive concept will be more apparent by describing certain exemplary embodiments of the present inventive concept with reference to the accompanying drawings, in which:
FIG. 1 is a diagram illustrating a display system according to an exemplary embodiment;
FIG.2 is an example of a block diagram illustrating a remote controller according to an exemplary embodiment;
FIG.3 is a diagram illustrating various examples of a remote controller according to an exemplary embodiment;
FIG.4 is an example of a block diagram illustrating a display apparatus according to an exemplary embodiment;
FIGS.5 to 10 are diagrams illustrating various examples of a display screen according to an exemplary embodiment;
FIG.11 is a flow chart illustrating a display method according to an exemplary embodiment; and
FIG.12 is a diagram for specifically illustrating a structure of a display apparatus according to an exemplary embodiment.

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

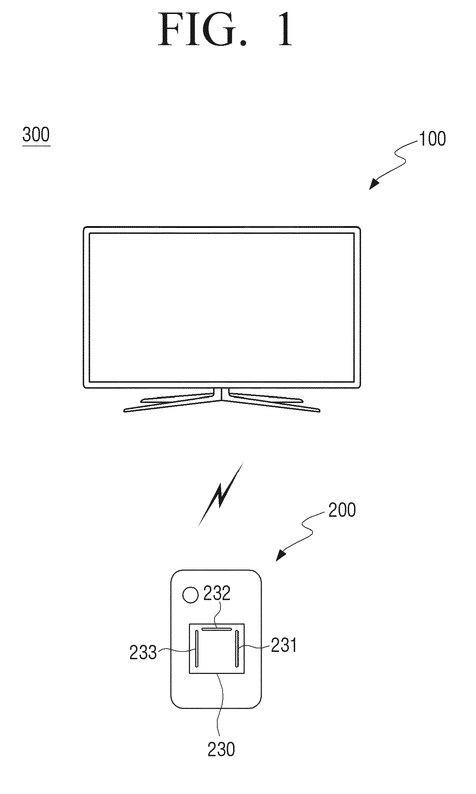

FIG. 1 is a diagram illustrating a structure of a display system 300 according to an exemplary embodiment. Referring to FIG.1, the display system 300 according to an exemplary embodiment includes a display apparatus 100 and a remote controller 200.

The remote controller 200 is a device for controlling operations of the display apparatus 100. The remote controller 200 generates a remote control signal for controlling the display apparatus 100 and transmits the generated remote control signal to the display apparatus 100. The display apparatus 100 that receives the remote control signal performs an operation corresponding to the received remote control signal. The remote control signal may be generated by a press of at least one button mounted on the remote controller 200.

The remote controller 200 includes a touch pad 230. The touch pad 230 is a configuration which is formed on an upper side of the remote controller 200 in order to receive a user manipulation by a touch or a user touch input. Accordingly, when a user touches the touch pad 230, the remote controller 200 outputs a touch signal which is generated by a user touch. The display apparatus 100 receives the touch signal and performs an operation corresponding to the received touch signal. In this case, a touch signal is a signal which belongs to the remote control signal, and may be a remote control signal which is generated by a touch on the touch pad 230.

The touch pad 230 includes at least one projection. The at least one projection is a configuration which is formed on an edge of a side of the touch pad 230 in order to receive a user manipulation by a touch. Accordingly, when a user touches the projection, the remote controller 200 outputs a touch signal which is generated by a user touch, and the display apparatus 100 that received the touch signal displays a control graphic user interface (GUI) having at least one function menu. In addition, when the user performs a manipulation such as a touch operation, a touch and drag operation, a swipe operation, a drag and hold operation, and the like with respect to the projection, the display apparatus 100 receives a touch signal corresponding to the manipulation, and selects and executes a displayed function menu.

The projections can be formed as one or more raised portions on the touch pad area, e.g. as one or more ridges. It will be appreciated that there are numerous ways such projections can be formed can be formed within the touch pad area.

The touch pad 230 may include a plurality of projections 231 to 233. When the user touches each of the projections 231 to 233, the remote controller 200 may generate different touch signals. In this case, the display apparatus 100 may display a control GUI corresponding to the received touch signal.

Hereinafter, the remote controller 200 will be described in detail.

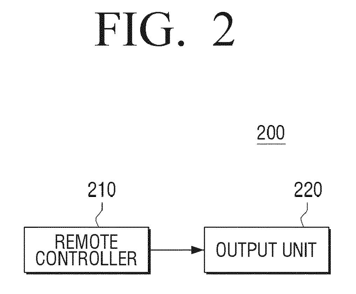

FIG.2 is an example of a block diagram illustrating the remote controller 200 according to an exemplary embodiment. Referring to FIG.2, the remote controller 200 according to an exemplary embodiment includes a touch signal generating unit 210 (e.g., a touch signal generator) and an output unit 220 (e.g., an output).

The touch pad 230 is mounted on an upper side of the remote controller 200, and senses a user touch performed on the touch pad 230. In addition, the at least one projection is formed on a side of the touch pad 230, and senses a user touch performed on the projection.

When a touch on the touch pad 230 is sensed, the touch signal generating unit 210 generates a touch signal corresponding to the touch pad 230, and when a touch on the projection is sensed, generates a touch signal corresponding to the projection. In this case, the touch signal generating unit 210 may be connected to the touch pad 230 and the projection respectively, and distinguish the touch on the touch pad 230 from the touch on the projection. Accordingly, the touch signal generating unit 210 may generate a touch signal corresponding to the touch pad 230 and a touch signal corresponding to the projection respectively.

The touch signal generating unit 210 may generate a touch signal corresponding to the touch pad 230 or the projection. In this case, the touch signal may display a control GUI having at least one function menu on the display apparatus 100.

Further, the touch signal generating unit 210 may respectively generate touch signals according to various operations such as a touch operation, a touch and drag operation, a swipe operation, a drag and hold operation, and the like with respect to the touch pad 230 or the projection. In this case, the touch signal generating unit 210 may generate various touch signals according to various operations such as a touch operation, a touch and drag operation, a swipe operation, a drag and hold operation, and the like.

The output unit 220 is connected to the touch signal generating unit 210, and receives the generated touch signal. In addition, the output unit 220 outputs the generated touch signal. In this case, the output unit 220 may apply various output methods according to a type of the generated touch signal. That is, when the generated touch signal is an Infrared Rays (IR) signal, the output unit 220 outputs the generated touch signal according to an IR communication method. When the generated touch signal is a wireless signal like Bluetooth, the output unit 220 outputs the generated touch signal according to a wireless communication method.

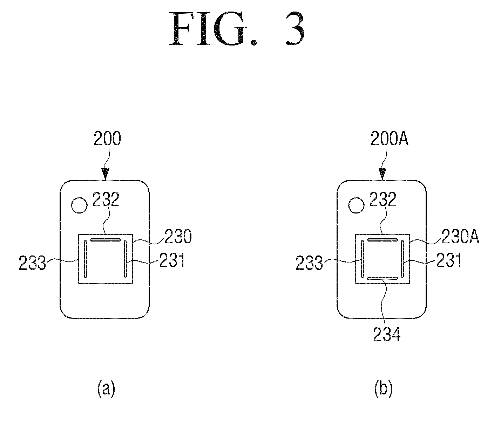

FIG.3 is a diagram illustrating various examples of a remote controller200 and 200Aaccording to an exemplary embodiment. Referring to FIG.3, an upper side of the remote controller 200 and 200A includes a touch pad 230 and 230A, and the touch pad 230 and 230A includes at least one projection. The projection may be recognized by tactile sensation of a user. In some embodiments, it is desirable that the projection is formed in a linear form. In this embodiment, the projection is formed on an edge of a side of the touch pad 230 and 230A.

As illustrated in (a) of FIG.3, the touch pad 230 includes three projections 231 to 233. Each of the projections 231 to 233 is formed in a linear form. The first projection 231, the second projection 232, and the third projection 233 are formed on an edge of a right side, an edge of an upper side, and an edge of a left side of the touch pad 230, respectively. In (a) of FIG.3, the touch pad 230 includes three projections 231 to 233, but embodiments of the invention are not limited thereto. That is, a touch pad may include at least one or more projections, and as illustrated in (b) of FIG.3, the touch pad 230A may include four projections 231 to 234.

As illustrated in (b) of FIG.3, the touch pad 230A includes four projections 231 to 234. Each of the projections 231 to 234 is formed in a linear form. The first projection 231, the second projection 232, the third projection 233, and the fourth projection 234 are formed on an edge of a right side, an edge of a upper side, an edge of a left side, and an edge of a lower side of the touch pad 230A, respectively.

Hereinafter, the display apparatus 100 will be described in detail.

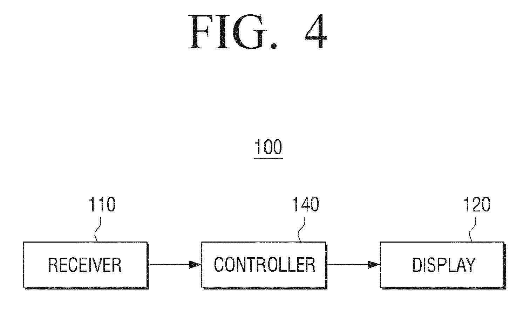

FIG.4 is an example of a block diagram illustrating the display apparatus 100 according to an exemplary embodiment. Referring to FIG.4, the display apparatus 100 according to an exemplary embodiment includes a receiver 110, a controller 140, and a display 120. The display apparatus 100 is not limited to a TV, and includes all types of display apparatuses capable of executing functions by receiving a remote control signal from the remote controller 200.

The receiver 110 receives a remote control signal from the remote controller 200. In this case, the receiver 110 may be formed on an arbitrary area such as a front, a side, and a rear of the display apparatus 100. The area of the receiver 110 may vary depending upon a communication method of the remote controller 200. For example, when the remote controller 200 transmits an IR signal, the receiver 110 may be disposed on a front of the display apparatus 100, that is, a surface which is the same as a surface where the display 120 is disposed. When the remote controller 200 transmits a remote control signal by using a wireless communication method like Bluetooth, the receiver 110 may be embedded in the display apparatus 100.

The receiver 110 receives a touch signal corresponding to a projection formed within the touch pad 230. Accordingly, when a user touches the projection, the remote controller 200 outputs a touch signal which is generated by the touch of the user, and transmits the touch signal to the receiver 110 of the display apparatus 100. The receiver 110 transmits the received touch signal to the controller 140. As described above, the touch signal may be generated differently according to various manipulations such as a touch operation, a touch and drag operation, a swipe operation, a drag and hold operation, and the like.

When the display apparatus 100 receives a touch signal from the remote controller 200 while the content is displayed, the controller 140 displays a control GUI having at least one function menu on the display 120. Herein, the function menu may be a GUI for displaying a control function with respect to the display apparatus 100 so that a user selects the function. For example, the function menu may include a first function menu for executing a volume-up function and a second function menu for executing a volume-down function. The control GUI may be a GUI including the first function menu and the second function menu.

In this case, the control GUI may be displayed in a form similar to the touched projection, and thus, remind a user of the touched projection. Accordingly, the control GUI may be displayed in a linear form on a side of the displayed content.

In addition, a touch signal is generated differently depending upon a touched position of the projection, and thus, the receiver 110 receives a touch signal corresponding to a drag operation which is performed on the projection by the user. Accordingly, the controller 140 may move a cursor onto the control GUI to correspond to the touched position of the projection.

When a user manipulation is received from the projection, the controller 140 selects and automatically executes a function menu in response to the user manipulation. For example, when a user performs a drag operation in a direction corresponding to a direction where the first function menu is located while a cursor is displayed on the control GUI, the controller 140 may select and automatically execute the first function menu.

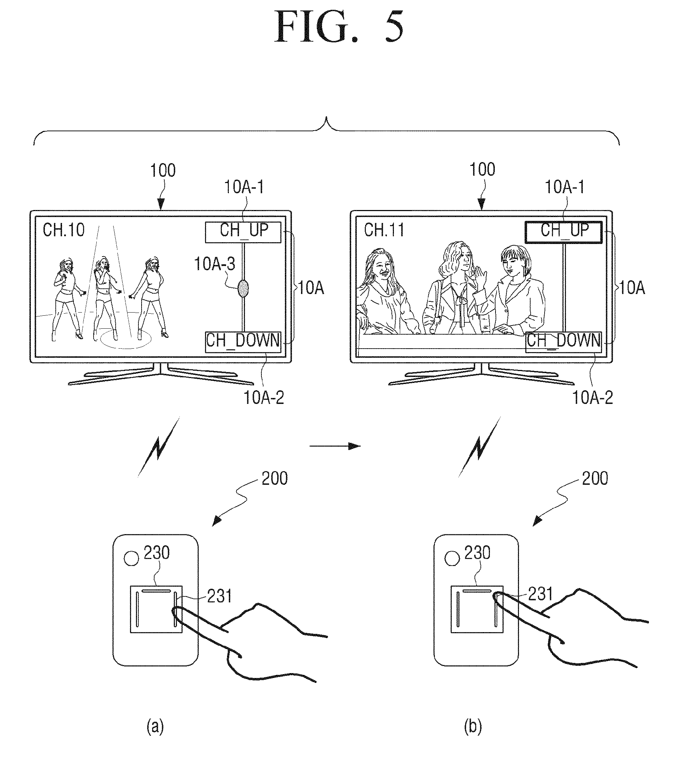

FIGS.5 to 10 are diagrams illustrating various example of a display screen according to an exemplary embodiment. Hereinafter, the overlapped description is omitted.

In FIG.5, a case where a user touches the first projection 231 is illustrated. In (a) of FIG.5, the display apparatus 100 is in a TV broadcast receive mode, and a screen of the display 120 displays a broadcast of a certain channel. In this state, when a user touches a center of the first projection 231 which is formed on a right edge from among three projections formed in the touch pad 230 of the remote controller 200, the receiver 110 receives a touch signal corresponding to the center of the first projection 231. In this case, the controller 140 displays a first control GUI 10A on a position corresponding to a position where the first projection 231 is formed out of the display screen. In addition, the control GUI may be displayed in a form corresponding to the touched projection. According to (a) of FIG.5, the touched first projection 231 is formed in a liner form on a right edge of the touch pad 230, and thus, the controller 140 displays the first control GUI 10A in a linear form on the right edge of the display screen.

In addition, the controller 140 may display a cursor 10A-3 on the control GUI, and display different function menus on both end portions of the control GUI respectively. According to (a) of FIG.5, the receiver 110 receives a touch signal corresponding to the center of the first projection 231, and thus, the controller 140 displays the cursor 10A-3 on the center of the first control GUI 10A, and displays the first function menu 10A-1 for sequentially displaying upper channels of a current channel and the second function menu 10A-2 for sequentially displaying lower channels of the current channel on both sides of the first control GUI 10A.

In this case, a pixel level of the cursor 10A-₃ may be higher than a pixel level of an adjacent screen, and the cursor 10A-3 may be displayed as an emphasis mark according to other various methods.

Subsequently, as illustrated in (b) of FIG.5, a user performs a drag operation in an upward direction from the center of the first projection 231. The receiver 110 receives a drag signal on the first projection 231. When the drag signal in a direction where a projection is formed is received, the controller 140 moves the cursor 10A-3 in a direction corresponding to the direction, and selects a function menu corresponding to a position where the cursor 10A-3 is moved. Accordingly, as illustrated in (b) of FIG.₅, the cursor 10A-3 is moved in an upward direction from the center of the first control GUI 10A, and the first function menu 10A-1 which is displayed in the direction where the cursor 10A-₃ is moved is selected. That is, the first function menu 10A-1 is selected, and thus, the controller 140 may display a broadcast of the upper channel of the current channel. In this case, the pixel level of the selected first function menu 10A-1 may be higher than the pixel level of the adjacent screen, and an emphasis mark according to other various methods may be displayed.

When a drag and hold signal in the direction where the projection is formed is received, the controller 140 may select and consecutively execute a function menu corresponding to the drag direction while a hold state is maintained. If a user performs a drag and hold operation in an upward direction from the center of the first projection 231, the controller 140 may display broadcasts of the upper channels of the current channel sequentially.

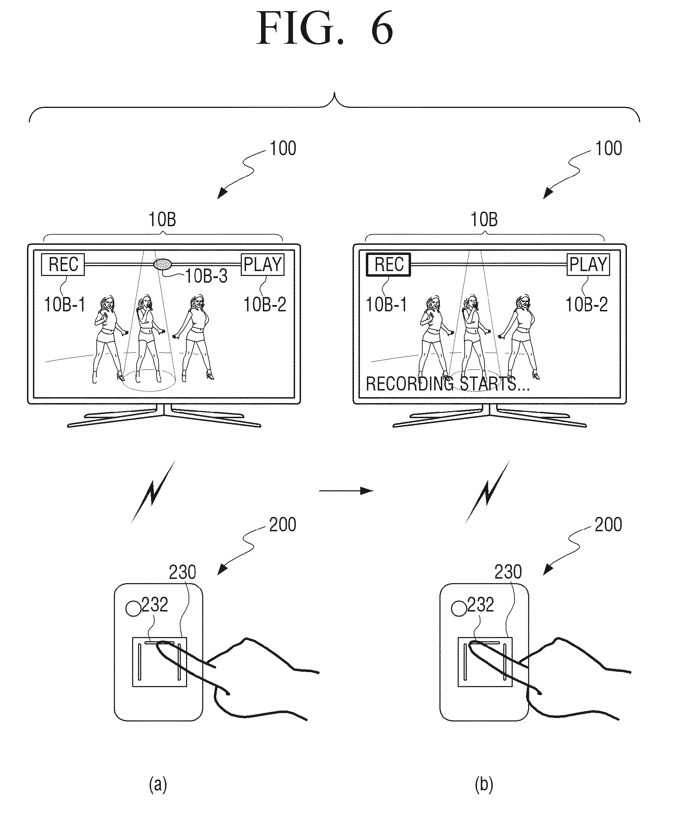

In FIG.6, a case where a user touches the second projection 232 is illustrated. In (a) of FIG.6, the display apparatus 100 is in the TV broadcast receive mode, and a screen of the display 120 displays a broadcast of a certain channel. In this state, when a user touches a center of the second projection 232 which is formed on an upper edge of the touch pad 230 from among three projections formed in the touch pad 230, the receiver 110 receives a touch signal corresponding to the center of the second projection 232. According to (a) of FIG.6, the touched second projection 232 is formed in a linear form on the upper edge of the touch pad 230, and thus, the controller 140 displays a second control GUI 10B in a linear form on the upper edge of the display screen.

In addition, the receiver 110 receives a touch signal corresponding to the center of the second projection 232, and thus, the controller 140 displays a cursor 10B-3 on the center of the second control GUI 10B, and displays a first function menu 10B-1 for recording a displayed broadcast content and a second function menu 10B-2 for reproducing the recorded broadcast content on both sides of the second control GUI 10B.

Subsequently, as illustrated in (b) of FIG.6, the user performs a drag operation in a left direction from the center of the second projection 232. The receiver 110 receives a drag signal on the second projection 232. A cursor 10B-3 is moved in a left direction from the center of the second control GUI 10B, and the first function menu 10B-1 which is displayed in the direction where the cursor 10B-3 is displayed is selected. That is, the first function menu 10B-1 is selected, and thus, the controller 140 may record a displayed broadcast content from a point of time when the first function menu 10B-1 is selected.

The controller 140 may inform that an operation corresponding to the selected control function is performed. That is, as illustrated in (b) of FIG.6, a text for showing that a recording operation is in progress may be displayed on a side of the display screen.

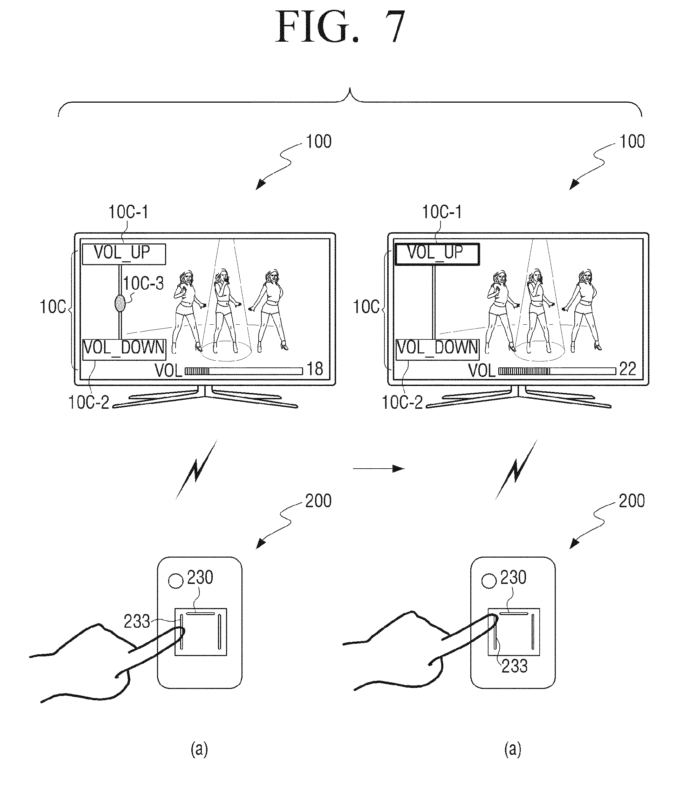

In FIG.7, a case where a user touches a third projection 233 is illustrated. In (a) of FIG.7, the display apparatus 100 is in the TV broadcast receive mode, and the screen of the display 120 displays a broadcast of a certain channel. In this state, when a user touches a center of the third projection 233 which is formed on a left edge of the touch pad 230 from among three projections formed in the touch pad 230 of the remote controller 200, the receiver 110 receives a touch signal corresponding to the center of the third projection 233. According to (a) of FIG. 7, the touched third projection 233 is formed in a linear form on the left edge of the touch pad 230, and thus, the controller 140 displays a third control GUI 10C in a linear form on a left edge of the display screen.

In addition, the receiver 110 receives a touch signal corresponding to the center of the third projection 233, and thus, the controller 140 displays a cursor 10C-3 on a center of a third control GUI 10C, and displays a first function menu 10C-1 for increasing a volume and a second function menu 10C-2 for decreasing the volume on both sides or the third control GUI 10C, respectively. In this case, a GUI for showing a current volume state may be displayed on a side of the display screen.

Subsequently, as illustrated in (b) of FIG.7, the user performs a drag operation in an upward direction from the center of the third projection 233. The receiver 110 receives a drag signal on the third projection 233. The cursor 10C-3 is moved in an upward direction from the center of the third control GUI 10C, and the first function menu 10C-1 which is displayed in the direction where the cursor 10C-3 is moved is selected. That is, the first function menu 10C-1 is selected, and thus, the controller 140 may increase the volume. As illustrated in (b) of FIG.7_{,} a GUI for showing increase of the volume may be displayed on a side of the display screen.

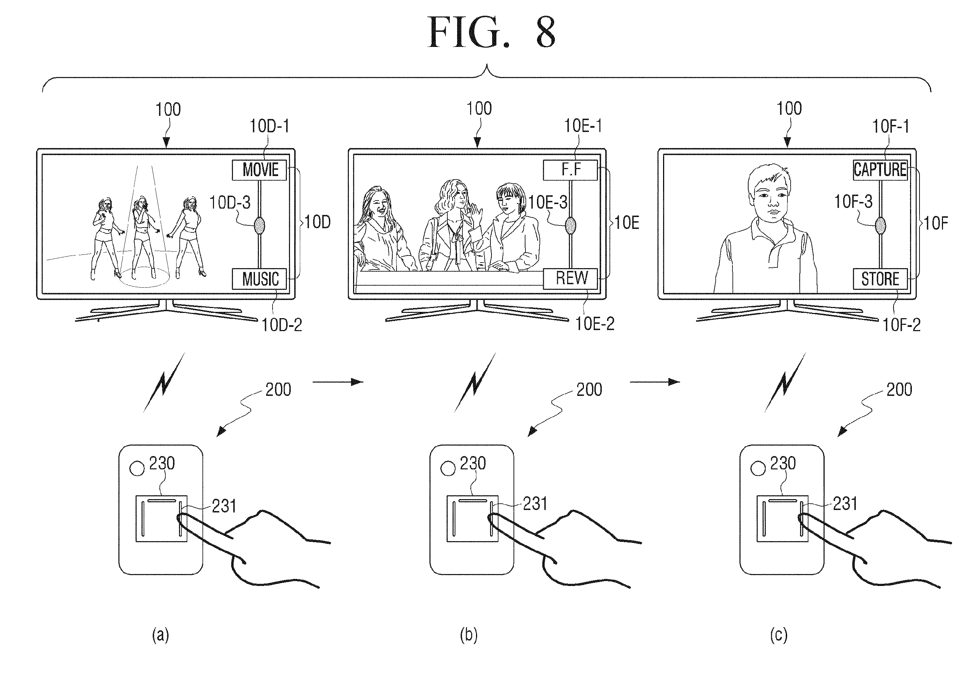

FIG.8 illustrates a control GUI according to a type of displayed content.

As illustrated in (a) to (c) of FIG.8, the display 120 displays various images according to an operation mode of the display apparatus 100. The operation mode may refer to a state according to a type of a subject displayed by the display apparatus 100. The operation mode may include a TV broadcast receive mode, a file select mode, a content reproduction mode, an internet mode, an external input mode, etc.

The TV broadcast receive mode may refer to a state where the display apparatus 100 outputs a TV broadcast by receiving a signal outputted by a TV broadcast station. The file select mode may refer to a state where entire categories of files are displayed in order to search a file that a user wishes to select. That is, the file select mode refers to a state where the display apparatus 100 displays a folder including files in order to search for a file such as content or an application that a user wishes to execute. The content reproduction mode refers to a state where the content stored in the display apparatus 100 is displayed. For example, the content reproduction mode may refer to a state where the content such as movies, dramas, photos, moving pictures, music files, and the like stored in a memory of the display apparatus 100 are displayed. The external input mode refers to a state where an external apparatus capable of transmitting/receiving a signal is connected to the display apparatus 100, and displays the content. For example, the external input mode may refer to a state where the display apparatus 100 is connected to a Digital Versatile Disk (DVD) player, receives a signal which is outputted from the DVD player, and displays contents in response to the received signal. Alternatively, the external input mode may refer to a state where the display apparatus 100 is connected to a Universal Serial Bus (USB) memory, and outputs the content such as movies, dramas, photos, moving pictures, music files, and the like stored in the USB memory. The internet mode refers to a state where the display apparatus 100 receives a signal from a web server and outputs the signal. For example, the internet mode may refer to a state where the display apparatus 100 transmits/receives information from a web server which is connected to the display apparatus 100 in a wired or wireless manner.

According to (a) to (c) of FIG.8, the user touches the first projection 231, and thus, the receiver 110 receives a touch signal corresponding to the first projection 231. In this case, the controller 140 may generate a control GUI which has different function menus according to a type of a displayed content, and display the control GUI on a side of the content. That is, the controller 140 may display a control GUI which has different function menus according to an operation mode of the display apparatus 100 on a side of the content.

In (a) of FIG.8, a case where the display apparatus 100 is in the file select mode is illustrated. In this case, when a touch signal corresponding to the first projection 231 is received, the controller 140 displays a control GUI having a file select function menu. Accordingly, as illustrated in (a) of FIG.8, a folder 10D-1 where files related to movies are stored and a folder 10D-2 where files related to music are stored are displayed on both sides of a control GUI 10D, respectively. In addition, a cursor 10D-3 used to select folder 10D-1 or folder 10D-2, is also displayed. When one of the files stored in the displayed folders is selected and executed, the display apparatus 100 may operate in the content reproduction mode.

In (b) of FIG.8, a case where the display apparatus 100 is in the content reproduction mode, and displays the stored content is illustrated. In this case, when a touch signal corresponding to the first projection 231 is received, the controller 140 displays a control GUI which has a content reproduction function menu. Accordingly, as illustrated in (b) of FIG.8, a Fast Forward function menu 10E-1 and a Rewind function menu 10E-2 are displayed on both sides of a control GUI 10E, respectively. In addition, a cursor 10E-3 used to select menu 10E-1 or menu 10E-2 is also displayed. The function menu is not limited to the function menus illustrated in (b) of FIG.8, and various reproduction-related functions may be displayed.

In (c) of FIG.8, a case where the display apparatus 100 is in the Internet mode, and executes a web browser is illustrated. In this case, when a touch signal corresponding to the first projection 231 is received, the controller 140 displays a control GUI which has a web-related function menu. Accordingly, as illustrated in (c) of FIG.8, a screen capture function menu 10F-1 and a captured screen store menu 10F-2 are displayed on both sides of the control GUI10F, respectively. In addition, a cursor 10F-3 used to select menu 10F-1 or menu 10F-2 is also displayed. The function menu displayed in (c) of FIG.8 is merely an example.

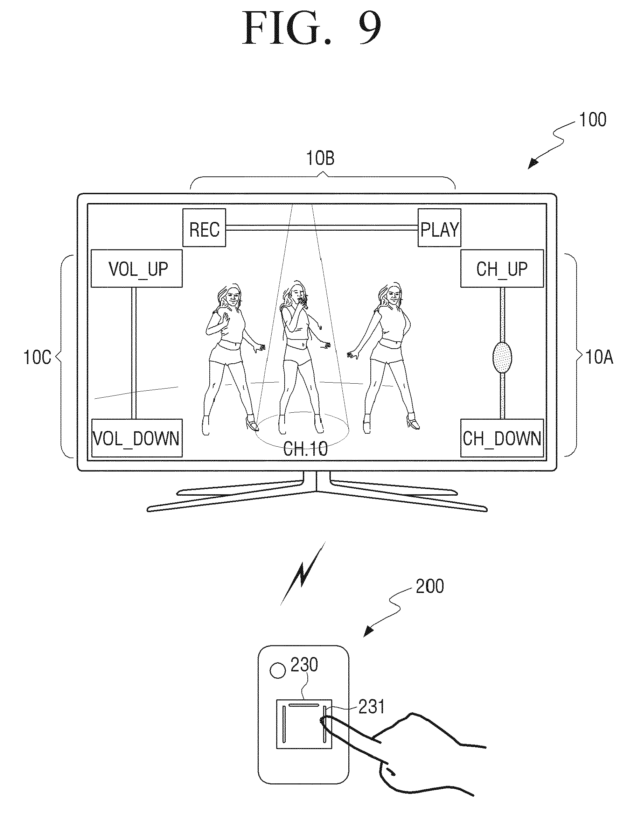

In FIG.9, a case where a plurality of control GUIs 10A, 10B, and 10C corresponding to the displayed contents are displayed is illustrated.

According to FIG.9, the display apparatus 100 is in the TV broadcast receive mode, and displays a broadcast of a certain channel on a screen is illustrated. In this state, when a user touches the center of the first projection 231, the controller 140 may display the plurality of control GUIs 10A, 10B, and 10C respectively corresponding to a plurality of projections 231 to 233. Accordingly, the first control GUI 10A, the second control GUI 10B, the third control GUI 10C are displayed on a left side, an upper side, and a right side of the display screen, respectively. In addition, the user touches the center of the first projection 231, and thus, a cursor may be displayed on the first control GUI 10A.

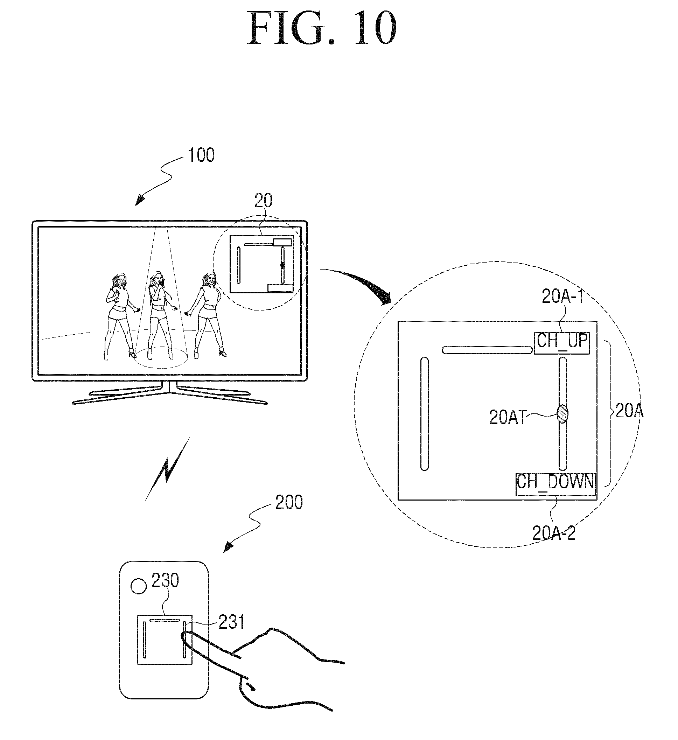

In FIG.10, a case where an On Screen Display (OSD) is displayed on a side of the displayed content is illustrated.

When a user touches a projection, the receiver 110 receives a touch signal. In this case, the controller 140 may form an OSD 20 on a side of the content, and display a control GUI 20A on a side of the formed OSD.

Accordingly, as illustrated in FIG.10, when the user touches the first projection 231, the OSD 20 is formed on a side of the display screen. On a side of the formed OSD 20, a control GUI 20A corresponding to the touch signal of the first projection 231 is displayed.

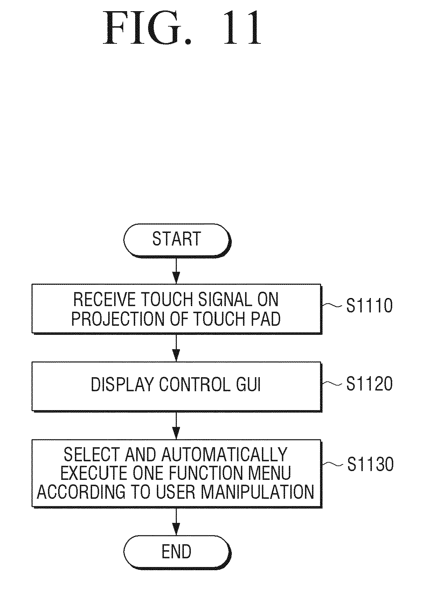

Specially, the controller 140 displays the control GUI 20A on a position of the OSD 20, which corresponds to a position where the touched projection is formed. According to FIG.10, the touched first projection 231 is formed on a right edge of the touch pad 230, and thus, the controller 140 displays the control GUI 20A on a right edge of the OSD 20. The control GUI 20A includes the cursor 20AT, the first function menu 20A-1 for sequentially displaying upper channels of a current channel and the second function menu 20A-2 for sequentially displaying lower channels of the current channel. FIG.11 is an example of a flow chart illustrating a display method according to an exemplary embodiment.

When the displayed apparatus 100 is turned on, the display apparatus 100 displays content. A user touches a projection which is formed within the touch pad 230. In this case, the remote controller 200 generates a touch signal corresponding to the projection, and transmits the touch signal to the display apparatus 100.

Subsequently, the display apparatus 100 receives the touch signal corresponding to the projection (Operation S1110). In this case, the touch signal may be a user touch performed on the projection, and may be generated by various manipulations such as a touch and drag operation, a swipe operation, a drag and hold operation, etc.

The display apparatus 100 that receives the touch signal displays a control GUI which has at least one function menu (Operation S1120). Herein, the function menu may be a GUI for displaying control functions with respect to the display apparatus 100 so that a user is able to select one of the control functions. In addition, the control GUI is displayed in a form similar to the touched projection, and thus, remind a user of the touched projection. Accordingly, the control GUI may be displayed in a linear form on a side of the displayed content.

A touch signal is generated differently depending upon a touched position of the projection, and thus, the display apparatus 100 receives a touch signal corresponding to a drag operation which is performed by a user on the projection. Accordingly, the display apparatus 100 may move a cursor onto the control GUI to correspond to the touched position of the projection.

When a user manipulation is received from the projection, the display apparatus 100 selects and automatically executes a function menu according to the user manipulation (Operation S1130). Accordingly, when a user performs a drag operation in a direction corresponding to the direction where the first function menu is located while a cursor is displayed on a control GUI, the display apparatus 100 may select and automatically execute the first function menu.

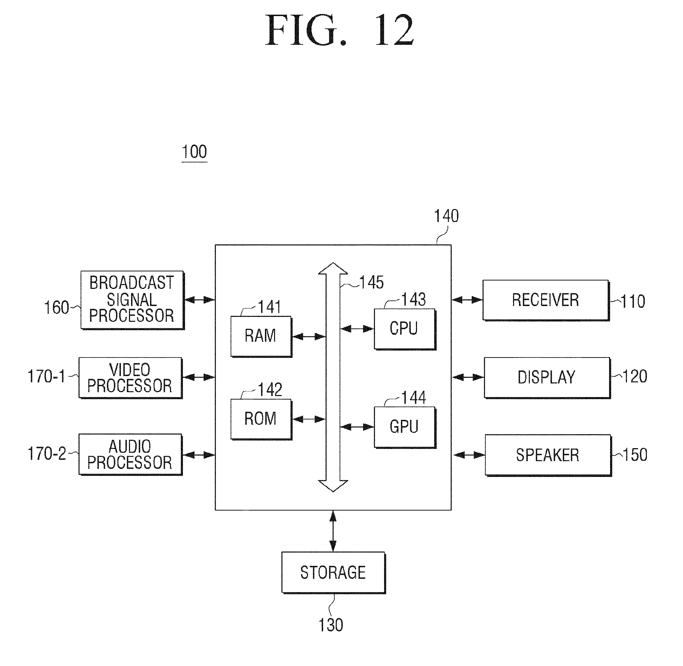

FIG.12 is a diagram for specifically illustrating a structure of the display apparatus100 according to an exemplary embodiment. Referring to FIG.12, the display apparatus 100 according to an exemplary embodiment includes the receiver 110, the display 120, a storage 130, the controller 140, a speaker 150, a broadcast signal processor 160, a video processor 170-1, and an audio processor 170-2.

The receiver 110 receives a remote control signal which is transmitted from the remote controller 100 outside the display apparatus, and transmits the received remote control signal to the controller 140. In this case, the remote control signal refers to all signals received from the remote controller 200, and includes a touch signal corresponding to a projection. Accordingly, when a user touches a projection, the remote controller 200 outputs a touch signal which is generated by the user touch and transmits the touch signal to the receiver 110 of the display apparatus 100, and the receiver 110 transmits the received touch signal to the controller 140.

The display 120 displays various images as described above. The display 120 may be embodied as various types of display such as Liquid Crystal Display (LCD), an Organic Light Emitting Diodes (OLED) display, a Plasma Display Panel (PDP), etc. The display 120 may include a driving circuit (e.g., a driver), a backlight unit (e.g., a backlight), and the like which may be embodied as a-Si Thin Film Transistor (TFT), Low Temperature Poly Silicon (LTPS) TFT, Organic TFT(OTFT), etc.

The storage 130 is a configuration for storing various programs and data necessary to operate the display apparatus 100. Further, the storage 130 may store a function menu which is matched with a touch signal. Herein, the function menu may refer to a command for performing such various functions selectable by the remote controller 200 as volume-up, volume-down, channel-up, channel-down, REC, PLAY, F/F, REW, etc. Specially, the storage 130 may store a function menu corresponding to a touch signal according to an operation mode of the display apparatus 100. Accordingly, when the display apparatus 100 is in a first operation mode, the controller 140 may display the first function menu by receiving a touch signal corresponding to the first projection 231, and when the display apparatus 100 is in a second operation mode, the controller 140 may display a second function menu by receiving the touch signal corresponding to the first projection 231.

The broadcast signal processor 160 is a configuration for receiving a broadcast signal and processing and converting the received broadcast signal into video data, audio data, and other data. When a broadcast signal is received, the broadcast signal processor 160 performs a signal processing such as demodulating, equalizing, demulitplexing, deinterleaving, decoding, and the like with respect to the received broadcast signal, and generates a video frame and an audio signal. The generated video frame is provided to the display 120, and the generated audio signal is provided to the speaker 150.

The video processor 170-1 is a configuration for processing video data included in the broadcast signal which is received through the broadcast signal processor 160. That is, the video processor 170-1 may perform various image processing such as decoding, scaling, noise filtering, frame rate conversion, resolution conversion, and the like with respect to image data. In this case, the display 120 may display an image frame generated by the video processor 170-1.

The audio processor 170-2 is a configuration for processing audio data included in the broadcast signal received through the broadcast signal processor 160. The audio processor 170-2 may perform various processing such as decoding, amplifying, noise filtering, and the like with respect to the audio data.

The speaker 150 is a configuration for converting and outputting the audio data processed by the audio processor 170-2 into a user voice or other sounds.

The controller 140 controls overall operations of the display apparatus 100 by using various programs and data stored in the storage 130. The controller 140 includes a Random Access Memory (RAM) 141, a Read-Only Memory (ROM) 142, a Central Processing Unit (CPU) 143, a Graphic Processing Unit (GPU) 144, and bus 145. The RAM 141, the ROM 142, the CPU 143, and the GPU 144 may be connected to each other through the bus 145.

The CPU 143 accesses to the storage 130, and performs a booting operation by using an Operating System (O/S) stored in the storage 130. In addition, the CPU 143 performs various operations by using various programs, contents, and data stored in the storage 130. Further, the CPU 143 determines an operation mode of the display apparatus 100, and extracts a function menu corresponding to the received touch signal.

The ROM 142 includes a command set for booting a system. When a turn-on command is input and power is supplied, the CPU 143 copies the O/S stored in the storage 130 into the RAM 141 according to a command stored in the ROM 142, and boots a system by executing the O/S. When the booting is completed, the CPU 143 copies various programs stored in the storage 130 into the RAM 141, and performs various operations by executing the programs copied into the RAM 141.

When the booting of the display apparatus 100 is completed, the GPU 144 displays an image. To be specific, the GPU 144 may generate a screen including various objects such as an icon, an image, and a text by using a calculator (not shown) and a rendering unit (not shown). The calculator (not shown) calculates an attribute value such as a coordinate value, a shape, a size, and a color of the objects to be displayed according to a layout of a screen. The rendering unit (not shown) generates a screen which includes an object and various layouts based on the attribute values calculated by the calculator (not shown). The screen generated by the rendering unit (not shown) is provided to the display 120 and displayed in a display area.

The GPU 144 displays a control GUI based on a touch signal which is received from the remote controller 200. In particular, when a touch signal corresponding to a center of a projection is received, the GPU 144 displays a cursor on a center of the displayed control GUI. In addition, when a drag signal in a direction is received from the center of the projection, the GPU 144 moves the cursor in a direction which is matched with the drag signal, and displays a screen for selecting a function menu which is located in the direction where the cursor is moved. Accordingly, the GPU 144 may display a user's touch manipulation according to the touch signal in the screen.

The display method according to the aforementioned various exemplary embodiments may be stored in a non-transitory readable medium. The non-transitory readable medium may be mounted on various devices.

For example, a program code for executing a display method including receiving a touch signal corresponding to a projection which is formed within a touch pad of a remote controller, displaying a control GUI including at least one function menu, and when a user manipulation is received from a projection, selecting and automatically executing a function menu according to the user manipulation may be stored in the non-transitory readable medium and provided.

As discussed, embodiments of the invention can provide a display apparatus comprising: a receiver configured to receive a touch signal corresponding to a projection formed within a touch pad of a remote controller; a display configured to, when the touch signal is received, display a control graphic user interface (GUI) having at least one function menu; and a controller configured to, when a user manipulation is received from the projection, select and automatically execute a function menu in response to the user manipulation.

In some embodiments, when the touch signal is received while a content is displayed on the display, the controller is arranged to generate the control GUI with different function menus according to a type of the content, and display the generated control GUI on a side of the content (e.g. a side region of the display area of the content).

In some embodiments, the control GUI is displayed in a linear form on a side of a displayed content (e.g. a side region of the display area of the content), and wherein the controller is arranged to move a cursor in the control GUI to correspond to a touched position of the projection. In some embodiment, when a touch signal corresponding to a center of the projection is received, the controller is arranged to display a cursor on a center of the control GUI, and to display different functions menus on both sides of the control GUI. In some embodiments, when a drag signal in a direction where the projection is formed is received, the controller is arranged to move the cursor in a direction corresponding to the direction, and to select a function menu corresponding to the direction where the cursor is moved.

In some embodiments, when a drag and hold signal in the direction where the projection is formed is received, the controller is arranged to select a function menu corresponding to a drag direction, and to execute the selected function menu consecutively while a hold state is maintained.

In some embodiments, the control GUI comprises a plurality of control GUIs which respectively correspond to a plurality of projections formed on the touch pad.

In some embodiments, the controller is arranged to form an on screen display (OSD) on a side of the content (e.g. a side region of the display area of the content), and to display the control GUI on a side of the formed OSD when the touch signal is received. Embodiments of the invention can also provide a remote controller having a touch pad of sensing a touch, the remote controller comprising: a touch signal generating unit configured to, when a touch on a projection formed within the touch pad is sensed, generate a touch signal; and an output unit configured to output the generated touch signal, wherein the touch signal controls a display to display a control graphic user interface (GUI) having at least one function menu on a display apparatus.

The projections may be formed within the touch pad area. In some embodiments, the projections may be formed as one or more ridge, for example at one or more side regions of the touch pad area.

Embodiments of the invention can also provide a display system comprising a display apparatus and a remote controller according to any of the above mentioned embodiments.

The non-transitory readable medium is a medium which semi-permanently stores data and is readable by a device. To be specific, various applications and programs as described above may be stored and provided in the non-transitory computer readable medium, such as a compact disc (CD), a digital versatile disk (DVD), a hard disk, a Blu-ray disk, a universal serial bus (USB), a memory card, and a read-only memory (ROM), etc.

As given above, although a few desirable exemplary embodiments have been shown and described, the present disclosure is not limited to the aforementioned particular exemplary embodiments, and could be variously modified and achieved by those skilled in the art to which the present disclosure pertains without deviating from the substance of the present disclosure which is claimed in the claims, and such modifications should not be understood separately from the technical concept or prospect of the present disclosure.

## Claims

1. A display apparatus comprising:
a receiver configured to receive a touch signal corresponding to a projection formed within a touch pad of a remote controller;
a display configured to, when the touch signal is received, display a control graphic user interface (GUI) having at least one function menu; and
a controller configured to, when a user manipulation is received from the projection, select and automatically execute a function menu in response to the user manipulation.

2. The apparatus as claimed in claim 1, wherein when the touch signal is received while a content is displayed on the display, the controller is arranged to generate the control GUI with different function menus according to a type of the content, and display the generated control GUI on a side of the content.

3. The apparatus as claimed in claim 1 or 2, wherein the control GUI is displayed in a linear form on a side of a displayed content, and
wherein the controller is arranged to move a cursor in the control GUI to correspond to a touched position of the projection.

4. The apparatus as claimed in claim 3, wherein when a touch signal corresponding to a center of the projection is received, the controller is arranged to display a cursor on a center of the control GUI, and to display different functions menus on both sides of the control GUI.

5. The apparatus as claimed in claim 4, wherein when a drag signal in a direction where the projection is formed is received, the controller is arranged to move the cursor in a direction corresponding to the direction, and to select a function menu corresponding to the direction where the cursor is moved.

6. The apparatus as claimed in claim 5, wherein when a drag and hold signal in the direction where the projection is formed is received, the controller is arranged to select a function menu corresponding to a drag direction, and to execute the selected function menu consecutively while a hold state is maintained.

7. The apparatus as claimed in claim 5 or 6, wherein the control GUI comprises a plurality of control GUIs which respectively correspond to a plurality of projections formed on the touch pad.

8. The apparatus as claimed in any one of claims 1 to 7, wherein the controller is arranged to form an on screen display (OSD) on a side of the content, and to display the control GUI on a side of the formed OSD when the touch signal is received.

9. A remote controller having a touch pad of sensing a touch, the remote controller comprising:
a touch signal generating unit configured to, when a touch on a projection formed within the touch pad is sensed, generate a touch signal; and
an output unit configured to output the generated touch signal,
wherein the touch signal controls a display to display a control graphic user interface (GUI) having at least one function menu on a display apparatus.

10. The remote controller as claimed in claim 9, wherein the projection is formed in a linear form on a side of the touch pad.

11. A display system comprising:
a remote controller according to claim 9; and
a display apparatus according to any one of claims 1 to 8.

12. A display method comprising:
receiving a touch signal corresponding to a projection formed within a touch pad of a remote controller;
displaying a control graphic user interface (GUI) having at least one function menu; and
when a user manipulation is received from the projection, selecting and automatically executing a function menu according to the user manipulation.

13. The method as claimed in claim 12, wherein when the touch signal is received while a content is displayed, the displaying a control GUI comprises displaying the control GUI with different function menus according to a type of the content.

14. The method as claimed in claim 12 or 13 further comprising:
moving a cursor in the control GUI to correspond to a touched position of the projection.

15. The method as claimed in any one of claims 12 to 14, wherein when a touch signal corresponding to a center of the projection is received, the displaying a control GUI comprises displaying a cursor on a center of the control GUI, and displaying different function menus on both sides of the control GUI.
